# FASCICULE DE BREVET EUROPEEN

(11) **EP 4 168 750 B1**
(45) Date de publication et mention de la délivrance du brevet: **06.08.2025**
(21) Numéro de dépôt: 21740597.6
(22) Date de dépôt: 17.06.2021
(51) Int. Cl.: G01F 1/667, G01F 1/66, G01F 15/14

(54) **DÉBITMÈTRE ET SON PROCÉDÉ DE MONTAGE**
DURCHFLUSSMESSER UND MONTAGEVERFAHREN DAFÜR
FLOW METER AND ASSEMBLY METHOD THEREFOR

(30) Priorité: 19.06.2020 FR 2006423
(43) Date de publication de la demande: 26.04.2023
(73) Titulaire: Integra Metering SAS, 31700 Blagnac (FR)
(72) Inventeur: ZEIDAN, Marwan, 82000 MONTAUBAN (FR); POUGET, Clémentine, 31200 TOULOUSE (FR); MORIN, Maxime, 31500 TOULOUSE (FR); RAMOND, Alain, 31000 TOULOUSE (FR)
(74) Mandataire: BARRE LAFORGUE
(86) Numéro de dépôt international: PCT/FR2021/051099
(87) Numéro de publication internationale: WO 2021/255397

(56) Documents cités:
- CN-A- 108 548 580
- DE-A1- 102011 101 257
- DE-A1- 19 713 526
- US-A- 5 705 753
- US-A1- 2014 103 274

## Description

L'invention concerne un débitmètre et son procédé de montage.

La mesure d'un temps de parcours d'une onde ultrasonore dans un fluide à l'aide d'au moins un transducteur ultrasonore permet d'en déduire le débit du fluide. Il existe de nombreuses catégories de débitmètres à ultrasons, dans lesquels le débit d'un fluide est mesuré par la vitesse de propagation d'une onde ultrasonore dans un fluide circulant dans une canalisation.

La présente invention s'applique aux débitmètres dans lesquels le transducteur ou au moins son dispositif de montage traverse la paroi de la canalisation pour rentrer en contact avec le fluide dont le débit est à mesurer, ainsi qu'aux débitmètres dans lesquels les transducteurs et/ou leur dispositif de montage sont installés à l'extérieur de la canalisation et dont la mesure est effectuée par transmission d'ondes au travers des parois de celle-ci.

On connaît déjà du document FR 3 047 068 un dispositif de montage d'un transducteur à ultrasons adapté pour être monté au travers d'une paroi d'un débitmètre comportant une canalisation, ledit dispositif étant adapté pour orienter une direction d'émission / réception du transducteur selon une direction diagonale, dite direction de mesure, formant un angle prédéterminé avec un axe longitudinal de la canalisation dans un plan de symétrie longitudinal de celle-ci.

On connaît aussi, du document CN 108548580A, un autre exemple de débitmètre avec des transducteurs qui sont montés selon une direction diagonale par rapport à l'axe de la canalisation et qui sont noyés dans de la résine époxy.

Les débitmètres comprenant des transducteurs ainsi orientés avec une direction de mesure selon une direction diagonale par rapport à la canalisation présentent en général un encombrement supérieur à d'autres débitmètres dont les transducteurs seraient disposés d'un même côté de la canalisation notamment. En outre, la configuration des transducteurs dans de tels débitmètres pose le problème de la fiabilité de l'assemblage des différents éléments composant ledit débitmètre et de la mise en place des connexions électriques entre les transducteurs et une carte électronique du débitmètre.

L'invention vise donc à proposer un débitmètre et un procédé de montage qui permettent un montage facilité des éléments composant ledit débitmètre tout en procurant une excellente robustesse et une excellente fiabilité des connexions électriques entre les différents éléments composant le débitmètre.

L'invention permet également de proposer un débitmètre pouvant être fabriqué en grandes séries à des coûts compatibles avec son exploitation à l'échelle industrielle et avec une utilisation dans les usages courants, par exemple pour la mesure de débit dans les canalisations d'adduction d'eau.

Plus précisément, l'invention a pour objet un débitmètre comportant :
- une canalisation de mesure du débit d'un fluide, ladite canalisation s'étendant selon un axe longitudinal,
- au moins un premier transducteur à ultrasons et au moins un deuxième transducteur à ultrasons, lesdits transducteurs à ultrasons étant montés en regard l'un de l'autre vis-à-vis d'une paroi de ladite canalisation,
- au moins un premier logement délimitant un volume interne de réception dudit premier transducteur à ultrasons, et au moins un deuxième logement délimitant un volume interne de réception dudit deuxième transducteur à ultrasons,
- des capots latéraux aptes à obturer l'ouverture de chaque logement,
- au moins une carte électronique reliée électriquement au premier transducteur à ultrasons et au deuxième transducteur à ultrasons,
- un réceptacle principal comprenant une ouverture principale et un fond, la concavité dudit réceptacle principal étant orientée à l'opposé d'un axe longitudinal de la canalisation, ledit réceptacle principal délimitant un volume interne de réception de ladite carte électronique.

Le débitmètre se caractérise en ce qu'il comporte :
- au moins un premier conduit reliant le volume interne de réception de ladite carte électronique dudit réceptacle au volume interne de réception dudit premier transducteur à ultrasons, le premier conduit étant ménagé au sein de la paroi de ladite canalisation,
- au moins un deuxième conduit reliant le volume interne de réception de ladite carte électronique dudit réceptacle au volume interne de réception dudit deuxième transducteur à ultrasons, le deuxième conduit étant ménagé au sein de la paroi de ladite canalisation,
- un matériau de comblement choisi dans un groupe formé de résines thermodurcissables, ledit matériau de comblement remplissant au moins en partie ledit volume interne de réception dudit premier transducteur à ultrasons, ledit volume interne de réception dudit deuxième transducteur à ultrasons, ledit premier conduit et ledit deuxième conduit, ledit matériau de comblement remplissant en outre au moins en partie ledit volume interne de réception de ladite carte électronique.

Ledit premier conduit et ledit deuxième conduit qui relient le réceptacle principal respectivement au premier logement et au deuxième logement de réception des transducteurs sont adaptés pour permettre l'écoulement d'un matériau de comblement sous forme liquide. Ainsi ledit matériau de comblement peut être introduit sous forme liquide (dont la viscosité peut varier en fonction de la nature du matériau de comblement utilisé et de la température notamment) uniquement via le réceptacle principal ou l'un des logements de réception des transducteurs et se répandre au moins dans chaque logement de réception des transducteurs, le premier conduit, le deuxième conduit et le réceptacle principal. Ceci permet de noyer, dans le matériau de comblement, les contacts et câbles électriques de la carte électronique mais aussi des transducteurs. Le matériau de comblement assure ainsi l'étanchéité de la carte électronique jusqu'aux transducteurs ce qui améliore la robustesse du débitmètre.

Dans certains modes de réalisation conformes à l'invention, chaque logement comprend une ouverture et un fond, la concavité de chaque logement étant orientée à l'opposé de l'axe longitudinal de ladite canalisation.

Dans certains modes de réalisation conformes à l'invention, ledit débitmètre comprend des capots latéraux aptes à obturer chaque ouverture.

Dans certains modes de réalisation conformes à l'invention, lesdits capots latéraux sont transparents. Ceci a pour avantage de permettre de visualiser les éléments disposés à l'intérieur de chaque logement.

Dans certains modes de réalisation conformes à l'invention, ledit débitmètre comprend un capot principal apte à obturer l'ouverture principale dudit réceptacle principal. Avantageusement, le capot principal peut obturer temporairement l'ouverture principale dudit réceptacle principal.

En particulier, ledit matériau de comblement est choisi dans le groupe formé des résines époxydes (ou « époxy »), des polyuréthanes, des silicones (notamment les polydiméthylsiloxanes (PDMS)), de leurs copolymères et de leurs mélanges.

Dans certains modes de réalisation conformes à l'invention, la paroi de la canalisation présente une surépaisseur dans chaque zone dans laquelle est ménagé un conduit de façon à former une nervure au sein de laquelle est au moins en partie ménagé un conduit. La surépaisseur ménagée au voisinage du conduit loge le conduit en limitant l'augmentation du volume de la paroi de la canalisation. De ce fait, la complexité et les coûts de fabrication sont réduits.

Dans certains modes de réalisation conformes à l'invention, ledit matériau de comblement remplit totalement ledit volume interne de réception dudit premier transducteur à ultrasons et ledit volume interne de réception dudit deuxième transducteur à ultrasons.

Dans certains modes de réalisation conformes à l'invention, ledit débitmètre comprend en outre au moins un premier câble électrique s'étendant dans ledit premier conduit de façon à relier électriquement ledit premier transducteur à ultrasons à ladite carte électronique et au moins un deuxième câble électrique s'étendant dans ledit deuxième conduit de façon à relier électriquement ledit deuxième transducteur à ultrasons à ladite carte électronique.

Dans certains modes de réalisation conformes à l'invention, ledit débitmètre comprend en outre un boîtier contenant ladite carte électronique, ledit boîtier étant disposé dans le volume interne dudit réceptacle principal.

Dans certains modes de réalisation conformes à l'invention, ladite carte électronique est disposée dans ledit boîtier de façon à s'étendre selon un plan orthogonal à l'axe longitudinal de la canalisation.

Dans une variante de réalisation particulièrement avantageuse, ledit premier transducteur à ultrasons et ledit deuxième transducteur à ultrasons s'étendent selon une direction orthogonale à l'axe longitudinal de ladite canalisation.

Dans une variante de réalisation particulièrement avantageuse, ledit débitmètre comprend quatre transducteurs à ultrasons, le volume interne de réception de chacun desdits premier et deuxième logements recevant deux transducteurs à ultrasons. Ainsi, ledit premier logement délimite un volume interne de réception dudit premier transducteur à ultrasons et d'un troisième transducteur à ultrasons et en ce que ledit deuxième logement délimite un volume interne de réception dudit deuxième transducteur à ultrasons et d'un quatrième transducteur à ultrasons.

Dans certains modes de réalisation conformes à l'invention, chaque transducteur à ultrasons comprend une plaquette piézoélectrique et deux tiges conductrices reliées électriquement à ladite carte électronique.

L'invention s'étend également à un procédé de montage d'un tel débitmètre.

L'invention concerne donc également un procédé de montage d'un tel débitmètre, caractérisé en ce qu'il comporte les étapes suivantes :
- on monte ledit premier transducteur à ultrasons dans le volume interne de réception dudit premier transducteur à ultrasons dudit premier logement et on monte ledit deuxième transducteur à ultrasons dans le volume interne de réception dudit deuxième transducteur à ultrasons dudit deuxième logement,
- on monte ladite carte électronique dans le volume interne de réception de ladite carte électronique dudit réceptacle principal,
- on relie électriquement ladite carte électronique au premier transducteur à ultrasons et au deuxième transducteur à ultrasons,
- après avoir relié électriquement ladite carte électronique au premier transducteur à ultrasons et au deuxième transducteur à ultrasons, on introduit un matériau de comblement sous forme liquide par l'ouverture principale du réceptacle principal,
- on réalise une étape de polymérisation et/ou de durcissement dudit matériau de comblement, et
- préalablement à l'introduction dudit matériau de comblement sous forme liquide, on obture les ouvertures de chaque logement par des capots latéraux.

Dans certains modes de réalisation conformes à l'invention, dans ledit procédé, on introduit au moins un premier câble électrique dans le premier conduit reliant électriquement le premier transducteur à ultrasons à la carte électronique et on introduit au moins un deuxième câble électrique dans le deuxième conduit reliant électriquement le deuxième transducteur à ultrasons à la carte électronique. Ces câbles permettent de relier électriquement ladite carte électronique au premier transducteur à ultrasons et au deuxième transducteur à ultrasons. Dans certains modes de réalisation conformes à l'invention, on introduit en particulier deux câbles électriques dans le premier conduit reliant électriquement le premier transducteur à ultrasons à la carte électronique et on introduit deux câbles électriques dans le deuxième conduit reliant électriquement le deuxième transducteur à ultrasons à la carte électronique. Il est également possible de faire passer d'autres câbles dans chacun desdits premier et deuxième conduits.

Dans certains modes de réalisation conformes à l'invention, ledit procédé comporte en outre une étape lors de laquelle on dispose ladite carte électronique dans un boîtier et on monte ledit boîtier dans le volume interne dudit réceptacle principal.

Dans certains modes de réalisation conformes à l'invention, dans ledit procédé, préalablement à l'introduction dudit matériau de comblement sous forme liquide, on obture les ouvertures de chaque logement par lesdits capots latéraux.

Dans certains modes de réalisation conformes à l'invention, ledit procédé comporte en outre une étape lors de laquelle on soumet au moins le volume interne dudit réceptacle principal à une pression inférieure à la pression atmosphérique. On peut par exemple connecter le volume interne dudit réceptacle principal à une source d'aspiration (de façon à faire le vide) ou encore disposer le débitmètre dans une enceinte sous vide.

Le procédé de montage selon l'invention comporte, en outre, les étapes suivantes :
- on fournit au moins une interface utilisateur comprenant un afficheur, un accumulateur électrique et des moyens de communication,
- on retire le capot principal du réceptacle 6 principal,
- on introduit un matériau de comblement sous forme liquide par l'ouverture principale du réceptacle principal, de manière à remplir tout ou partie du volume vide restant du volume interne du réceptacle principal,
- on relie électriquement l'interface utilisateur à la carte électronique et on positionne l'interface utilisateur dans un volume vide restant du volume interne du réceptacle principal,
- on retourne le débitmètre de manière à ce que le matériau de comblement enrobe l'interface utilisateur,
- on réalise une étape de polymérisation et/ou de durcissement dudit matériau de comblement,
- on place le capot principal sur le réceptacle 6 principal.

L'invention concerne également un débitmètre et un procédé caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
[Fig. 1] la figure 1 est une vue de face d'un débitmètre selon un premier mode de réalisation de l'invention,
[Fig. 2] la figure 2 est une vue de dessus d'un débitmètre selon le premier mode de réalisation de l'invention,
[Fig. 3] la figure 3 est une vue en coupe en biais selon la direction longitudinale d'un conduit d'un débitmètre selon le premier mode de réalisation de l'invention,
[Fig. 4] la figure 4 est une vue éclatée d'un débitmètre selon le premier mode de réalisation de l'invention,
[Fig. 5] la figure 5 est une vue en perspective d'un débitmètre selon le premier mode de réalisation de l'invention,
[Fig. 6] la figure 6 est une vue de face d'un débitmètre selon le premier mode de réalisation de l'invention,
[Fig. 7] la figure 7 est une vue de face d'un débitmètre selon le premier mode de réalisation de l'invention selon le côté opposé à celui représenté en figure 6,
[Fig. 8] la figure 8 est une vue de face d'un débitmètre selon un deuxième mode de réalisation de l'invention, avant montage des transducteurs à ultrasons,
[Fig. 9] la figure 9 est une vue de face d'un débitmètre selon le deuxième mode de réalisation de l'invention, après montage des transducteurs à ultrasons.

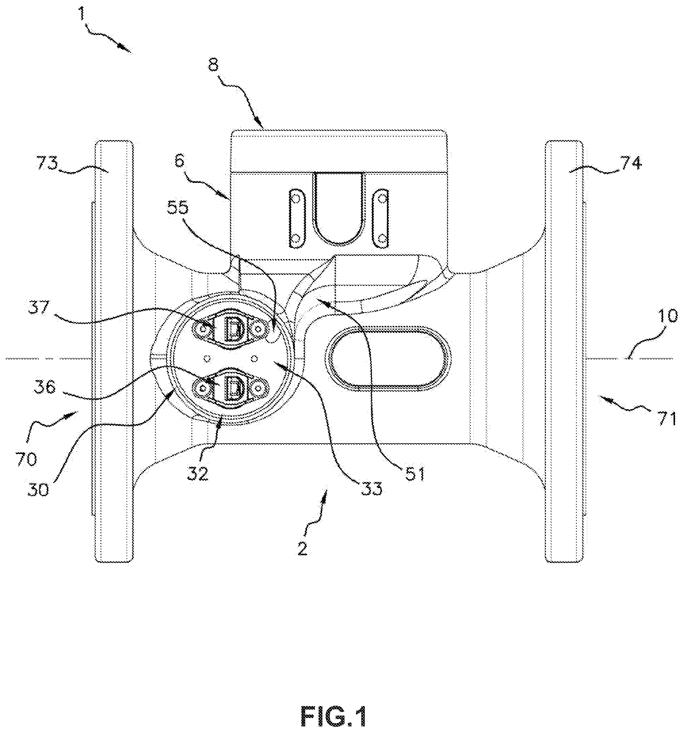

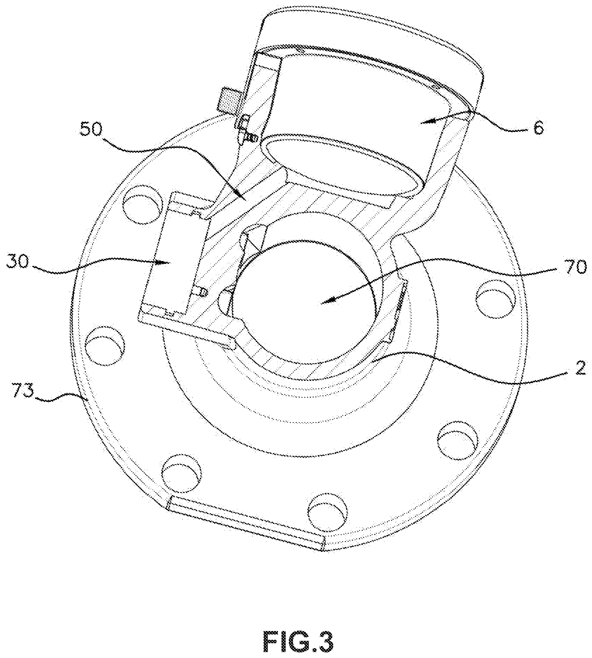

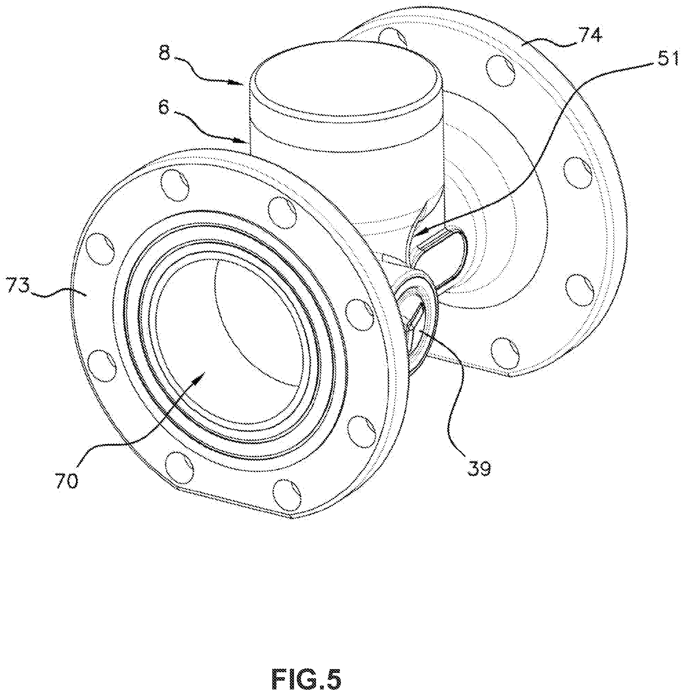

Les débitmètres 1 et 101 représentés aux figures 1 à 9 comportent une canalisation 2, 102 adaptée pour permettre la circulation d'un fluide à l'intérieur de ladite canalisation, ladite canalisation s'étendant selon un axe longitudinal 10, 110. Une telle canalisation peut par exemple être formée en fonte ou en matériau métallique (métaux ou alliages métalliques).

Dans un premier mode de réalisation d'un débitmètre selon l'invention, représenté aux figures 1 à 7, la canalisation 2 se présente sous la forme générale d'un tube terminé aux deux extrémités par des raccords 73, 74 annulaires susceptibles d'être assemblés à des conduites à l'aide d'organes d'assemblage tels que des boulons et des écrous. Entre les raccords 73, 74, la canalisation peut être parcourue par un fluide depuis une entrée 70 de fluide jusqu'à une sortie 71 de fluide.

Le débitmètre 1 comprend quatre transducteurs 36, 37 à ultrasons, lesdits transducteurs à ultrasons étant montés deux à deux en regard l'un de l'autre vis-à-vis d'une paroi de ladite canalisation. Chaque transducteur 36, 37 à ultrasons est disposé dans un logement 30, 40 délimitant un volume interne de réception desdits transducteurs à ultrasons. Le débitmètre 1 comprend un premier logement 30 délimitant un volume interne de réception de deux transducteurs 36, 37 à ultrasons et un deuxième logement 40 délimitant un volume interne de réception de deux autres transducteurs à ultrasons (non représentés).

En alternative, il est également possible de prévoir un seul transducteur à ultrasons par logement 30, 40. L'avantage de prévoir des transducteurs montés deux à deux réside dans le fait d'augmenter la précision de la mesure réalisée par le débitmètre. Un débitmètre selon l'invention peut donc ne comprendre que deux transducteurs à ultrasons, c'est-à-dire au moins deux transducteurs à ultrasons.

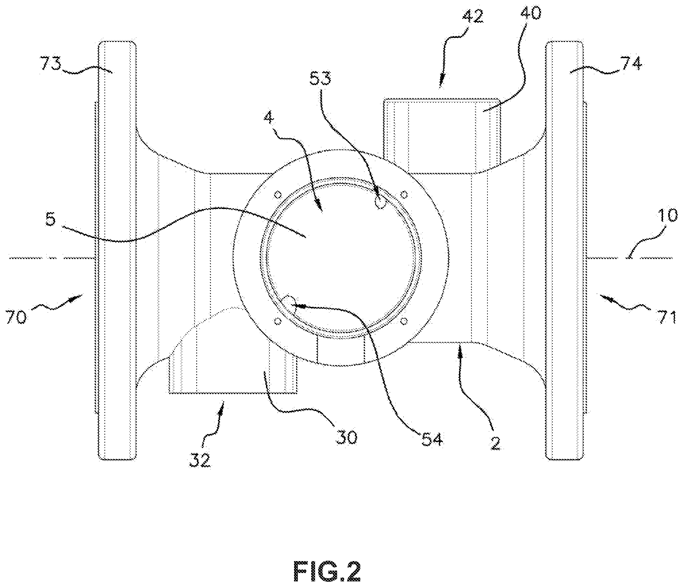

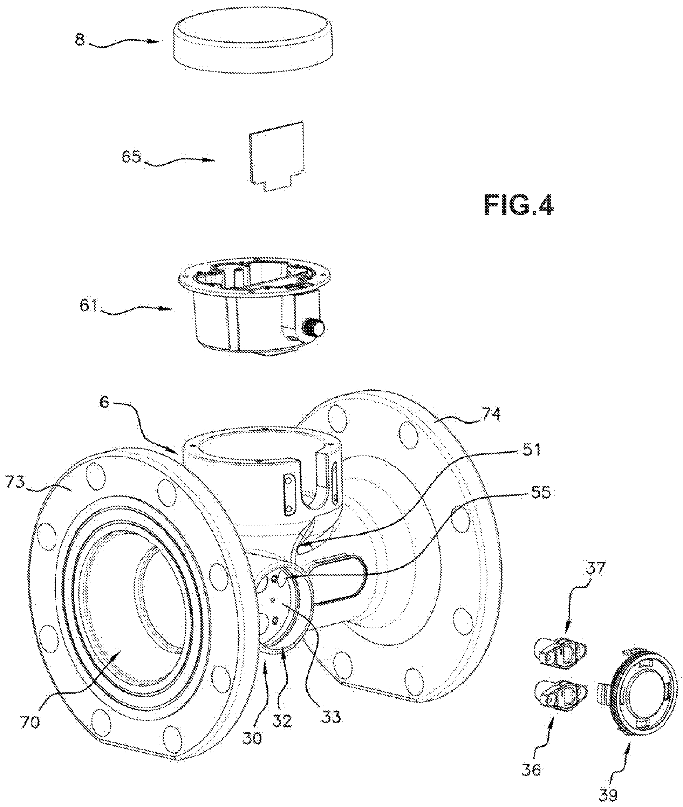

Chaque logement 30, 40 comprend une ouverture et un fond, la concavité de chaque logement étant orientée à l'opposé de l'axe longitudinal 10 de ladite canalisation, c'est-à-dire orientée vers l'extérieur de la canalisation 2. Entre d'autres termes, l'ouverture 32 de chaque logement 30, 40 est disposée vers l'extérieur de la canalisation 2, le fond 33 de chaque logement se trouvant donc plus proche de l'axe longitudinal 10 de la canalisation 2 que l'ouverture de chaque logement 30, 40 par rapport audit axe longitudinal 10 de la canalisation. Comme on peut le voir sur les figures 1 et 4, dans le mode de réalisation représenté, le logement 30 présente une ouverture 32 circulaire et un fond 33 plan. De façon similaire, le logement 40 présente une ouverture 42 circulaire (figure 2) et un fond (non représenté). Le fond 33 de chaque logement 30, 40 présente deux niches adaptées pour recevoir l'extrémité distale de chaque transducteur 36, 37 à ultrasons.

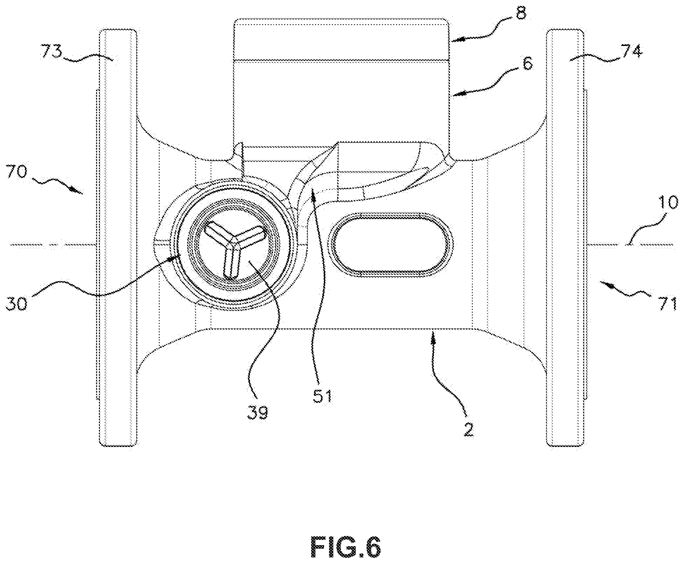

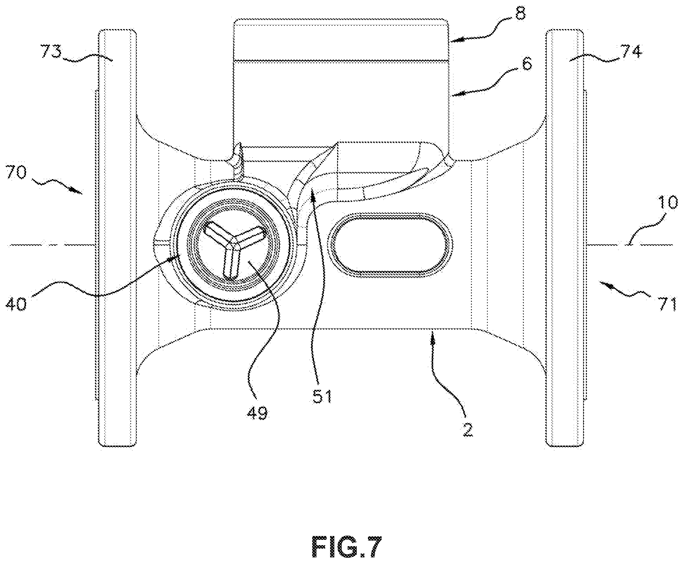

Le débitmètre comporte en outre des capots 39, 49 latéraux aptes à obturer l'ouverture de chaque logement 30, 40, le capot 39 latéral obturant l'ouverture du logement 30 (figure 6) et le capot 49 obturant l'ouverture du logement 40 (figure 7). De tels capots 39, 49 latéraux sont de préférence formés en matériau transparent (par exemple un matériau polymère transparent sous lumière visible tel qu'un polyméthacrylate de méthyle (PMMA) ou un polystyrène).

Les transducteurs à ultrasons montés deux à deux en regard l'un de l'autre sur la canalisation 2 sont orientés selon une direction de mesure formant un angle non nul et inférieur à 90° avec l'axe longitudinal de la canalisation 2. En particulier, les transducteurs à ultrasons sont disposés en diagonale l'un par rapport à l'autre vis-à-vis de la canalisation 2. Plus précisément, les transducteurs à ultrasons sont placés de part et d'autre d'un tronçon tubulaire formant la canalisation 2, de façon à être disposés chacun dans les volumes internes de réception délimités par le premier logement 30 et le deuxième logement 40. En particulier, dans une variante de réalisation d'un débitmètre 1 selon l'invention et tel que représentée sur les figures, les transducteurs 36, 37 à ultrasons sont montés au travers de la paroi de la canalisation 2. Dans une variante de réalisation particulièrement avantageuse d'un débitmètre selon l'invention, l'angle entre la direction de mesure et l'axe longitudinal de la canalisation 2 est de l'ordre de 30°, mais peut aller jusqu'à 50° voire plus en fonction des modèles de débitmètre.

Dans une variante de réalisation particulièrement avantageuse, les transducteurs 36, 37 à ultrasons s'étendent selon une direction orthogonale à l'axe longitudinal de ladite canalisation 2. Ainsi, de la même façon, les logements 30, 40 s'étendent selon une direction orthogonale à l'axe longitudinal 10 de ladite canalisation 2, c'est-à-dire que la paroi formant chaque logement 30, 40 s'étend selon une direction orthogonale à l'axe longitudinal 10 de la canalisation 2. Dans le premier mode de réalisation représenté aux figures 1 à 7, chaque logement 30, 40 présente une paroi sous la forme d'une portion tubulaire s'étendant à partir de la paroi de la canalisation 2, la direction longitudinale de cette portion tubulaire s'étendant selon une direction orthogonale à l'axe longitudinal de la canalisation 2. Plus particulièrement, dans le premier mode de réalisation représenté, les deux logements 30 et 40 s'étendent parallèlement l'un à l'autre, chacun d'un côté diamétralement opposé à l'autre par rapport à la canalisation 2. En outre et en particulier, le fond 33 de chaque logement 30, 40 est plan et s'étend selon un plan parallèle à l'axe longitudinal 10 de la canalisation 2.

Dans une variante de réalisation particulièrement avantageuse, chaque transducteur 36, 37 à ultrasons comprend une plaquette de matériau piézoélectrique et deux électrodes ou tiges conductrices. La plaquette de matériau piézoélectrique de chaque transducteur 36, 37 à ultrasons peut être protégée par un enrobage externe en matériau polymère. Dans une variante de réalisation, les faces principales de chaque transducteur 36, 37 à ultrasons sont orthogonales à la direction d'émission / réception des ondes ultrasonores. Chaque transducteur est monté de manière à ce que les transducteurs 36, 37 à ultrasons soient placés en vis-à-vis et que leur direction d'émission / réception respective coïncide avec la direction de mesure.

Chaque plaquette piézoélectrique est constituée d'un matériau piézoélectrique. Ce matériau piézoélectrique doit pouvoir émettre et recevoir des signaux ultrasonores et notamment à une fréquence de l'ordre de 4 MHz. Ce matériau est par exemple une céramique piézoélectrique telle que les titano-zirconates de plomb (PZT). Rien n'empêche d'utiliser d'autres matériaux piézoélectriques tels que des monocristaux.

Le débitmètre 1 selon le premier mode de réalisation comprend en outre un réceptacle 6 principal comprenant une ouverture 4 principale et un fond 5, la concavité du réceptacle étant orientée à l'opposé de l'axe longitudinal 10 de la canalisation, c'est-à-dire vers l'extérieur de la canalisation et non en direction de l'axe longitudinal de la canalisation. En d'autres termes, l'ouverture 4 du réceptacle 6 principal est disposée vers l'extérieur de la canalisation 2, le fond 5 du réceptacle 6 principal se trouvant donc plus proche de l'axe longitudinal 10 de la canalisation 2 que l'ouverture 4 du réceptacle 6 principal. Par ailleurs, le réceptacle délimite un volume interne de réception d'au moins une carte 65 électronique configurée pour être reliée électriquement à chaque transducteur à ultrasons. Divers modes de réalisation peuvent être envisagés en ce qui concerne les dimensions et les formes du réceptacle 6 principal. Le réceptacle 6 principal peut présenter toute forme quelconque ou encore une forme cubique ou cylindrique telle que dans le mode de réalisation représenté aux figures 1 à 7.

En particulier, le réceptacle 6 principal s'étend selon une direction orthogonale à l'axe longitudinal 10 de ladite canalisation 2, c'est-à-dire que la paroi formant le réceptacle 6 principal s'étend selon une direction orthogonale à l'axe longitudinal 10 de la canalisation 2. Dans le premier mode de réalisation représenté aux figures 1 à 7, le réceptacle 6 principal présente une paroi sous la forme d'une portion tubulaire s'étendant à partir de la paroi de la canalisation 2, la direction longitudinale de cette portion tubulaire s'étendant selon une direction orthogonale à l'axe longitudinal de la canalisation 2. En outre, dans le premier mode de réalisation représenté, le réceptacle 6 principal s'étend selon une direction sécante à chaque direction selon laquelle s'étend chaque logement 30, 40, et plus particulièrement le réceptacle 6 principal s'étend selon une direction orthogonale à chaque direction selon laquelle s'étend chaque logement 30, 40 (comme on peut le voir en particulier en figure 2).

Le débitmètre 1 comprend en outre un capot 8 principal adapté pour pouvoir obturer l'ouverture 4 principale du réceptacle 6 principal. Avantageusement, le capot principal peut obturer temporairement l'ouverture principale dudit réceptacle principal.

La carte 65 électronique et d'autres éléments du débitmètre à disposer dans le réceptacle 6 principal peuvent être eux-mêmes disposés dans un boîtier 61 adapté pour pouvoir être inséré dans ledit réceptacle 6. Le boîtier 61 contient donc la carte électronique 65, ledit boîtier étant disposé dans le volume interne dudit réceptacle 6 principal. Un tel boîtier 61 permet de faciliter le montage du débitmètre en permettant de prédisposer des éléments du débitmètre dans celui-ci, préalablement à son insertion dans le réceptacle 6 principal. Un tel boîtier 61 permet également de protéger les éléments qu'il contient. En particulier, lorsqu'il est formé en matériau polymère, le boîtier 61 permet de garantir l'isolation électrique de la carte 65 électronique par rapport au corps du débitmètre, en particulier par rapport à la paroi du réceptacle 6 principal et à la conduite si elles sont formées d'un matériau métallique électriquement conducteur, indépendamment de sa nature ou de la qualité de son revêtement éventuel, ou encore de la qualité de la fixation de la carte 65 électronique dans le boîtier 61 et le réceptacle 6 principal.

Le corps du débitmètre peut comprendre l'ensemble formé par chaque logement, le réceptacle 6 principal, la canalisation 2 et les raccords 73, 74. Le corps du débitmètre peut être fabriqué de façon à être formé d'une seule et unique pièce (par exemple par moulage de fonte ou d'un autre matériau métallique notamment), ou de différentes parties assemblées entre elles, par exemple par soudure.

Dans le mode de réalisation représenté aux figures 1 à 7, et comme on peut le voir sur la figure 4 en particulier, la carte 65 électronique est disposée orthogonalement au fond 5 du réceptacle 6 principal. Toutefois, dans d'autres modes de réalisation (non représentés), la carte 65 électronique peut être disposée dans un plan non orthogonal au fond 5 du réceptacle 6 principal. Par ailleurs, la carte 65 électronique comprend des broches de connexion, dites broches de connexion externe, autres que celles utilisées pour la connecter à chaque transducteur à ultrasons. En particulier les broches de connexion externe sont configurées pour connecter la carte 65 électronique avec des équipements qui permettent au débitmètre selon l'invention de communiquer avec l'extérieur.

Dans une variante de réalisation d'un débitmètre selon l'invention, le débitmètre comprend également au moins un accumulateur électrique tel qu'une pile, rechargeable ou non, relié électriquement à la carte 65 électronique et disposé au sein du réceptacle 6 principal, et en particulier à l'intérieur du boîtier 61.

Le débitmètre 1 selon le premier mode de réalisation comprend en outre au moins un premier conduit 50 reliant le réceptacle 6 principal, et plus particulièrement le volume interne de réception de la carte 65 électronique du réceptacle 6 principal, au volume interne de réception de chaque transducteur à ultrasons, c'est-à-dire à chaque logement 30, 40. Dans les modes de réalisation représentés, chaque débitmètre comprend deux conduits 50, un premier conduit 50 reliant le volume interne de réception de la carte électronique du réceptacle au volume interne de réception du premier transducteur à ultrasons, et un deuxième conduit 50 (non représenté) reliant le volume interne de réception de la carte électronique du réceptacle au volume interne de réception du deuxième transducteur à ultrasons, chaque conduit étant ménagé au sein de la paroi de la canalisation. Chaque conduit 50 est ménagé au sein de la paroi de la canalisation 2, c'est-à-dire en particulier que chaque conduit 50 est ménagé au sein de l'épaisseur du matériau formant la canalisation 2. La paroi de la canalisation 2 peut également présenter une surépaisseur dans chaque zone dans laquelle est ménagé un conduit 50 par exemple de façon à former une nervure 51 au sein de laquelle est au moins en partie ménagé un conduit. Une telle surépaisseur ou nervure 51 peut être formée au moment du moulage de la canalisation 2, du réceptacle 6 principal et des logements 30, 40 de façon à ne former qu'une unique pièce. En particulier, dans les modes de réalisation représentés, le deuxième conduit 50 est identique au premier conduit (en termes de formes et de dimensions).

Différentes formes de réalisation peuvent être envisagées concernant la forme de chaque conduit. Chaque conduit peut présenter une section droite transversale au moins partiellement courbe (notamment circulaire) et/ou au moins partiellement polygonale. Cette section peut être constante ou variable. Chaque conduit peut être au moins partiellement rectiligne et/ou au moins partiellement courbé et s'étendre selon une unique direction ou selon plusieurs directions distinctes, en présentant une unique portion ou une pluralité de portions successives. En particulier, chaque conduit est dénué de portion formant un angle de l'ordre de 90° ou moins par rapport au plan dans lequel s'étend le fond 5 du réceptacle 6 principal ou par rapport à une portion adjacente de ce conduit. Chaque conduit peut s'étendre selon une direction formant un angle compris entre 30° et 70° par rapport au plan dans lequel s'étend le fond 5 du réceptacle 6 principal. Dans le mode de réalisation représenté aux figures 1 à 7, chaque conduit est rectiligne (et s'étend selon une unique direction longitudinale) et présente une section droite transversale circulaire. Un conduit présentant un diamètre de l'ordre de 8 mm d'un débitmètre dont la canalisation présente un diamètre de l'ordre de 80 mm et dont la paroi présente une épaisseur de l'ordre de 10 mm s'étend par exemple selon une direction formant un angle de l'ordre de 50° par rapport au plan dans lequel s'étend le fond du réceptacle 6 principal.

Comme on peut le voir sur la figure 2, chaque conduit 50 présente un orifice 53, 54 d'entrée ménagé à travers le fond 5 du réceptacle 6 principal, et un orifice 55 de sortie (comme on peut le voir en figure 1) ménagé à travers le fond 33 du premier logement 30.

Le débitmètre 1 selon le premier mode de réalisation comprend en outre au moins un premier câble électrique (non représenté) s'étendant dans ledit premier conduit 50 de façon à relier électriquement les transducteurs 36, 37 à ultrasons du premier logement 30 à la carte électronique 65 et au moins un deuxième câble électrique (non représenté) s'étendant dans le deuxième conduit de façon à relier électriquement les transducteurs à ultrasons du deuxième logement 40 à ladite carte électronique 65 disposée dans le réceptacle 6 principal.

Le débitmètre 1 comprend en outre un matériau de comblement choisi dans un groupe formé des résines thermodurcissables. Un tel matériau de comblement remplit au moins en partie le volume interne de réception du premier transducteur à ultrasons et le volume interne de réception du deuxième transducteur à ultrasons. Le matériau de comblement remplit en outre au moins en partie chaque conduit et le volume interne de réception de la carte 65 électronique, c'est-à-dire le réceptacle 6 principal. Chaque conduit 50 est adapté pour permettre l'écoulement d'un tel matériau de comblement sous forme liquide.

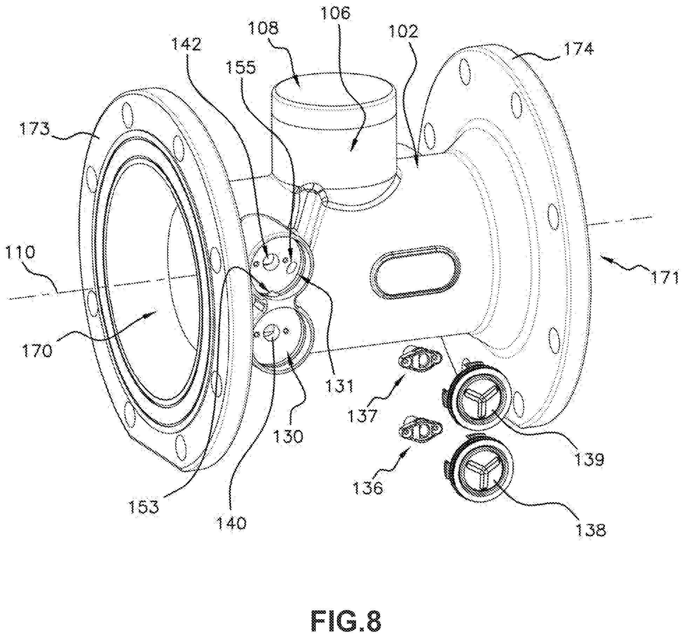

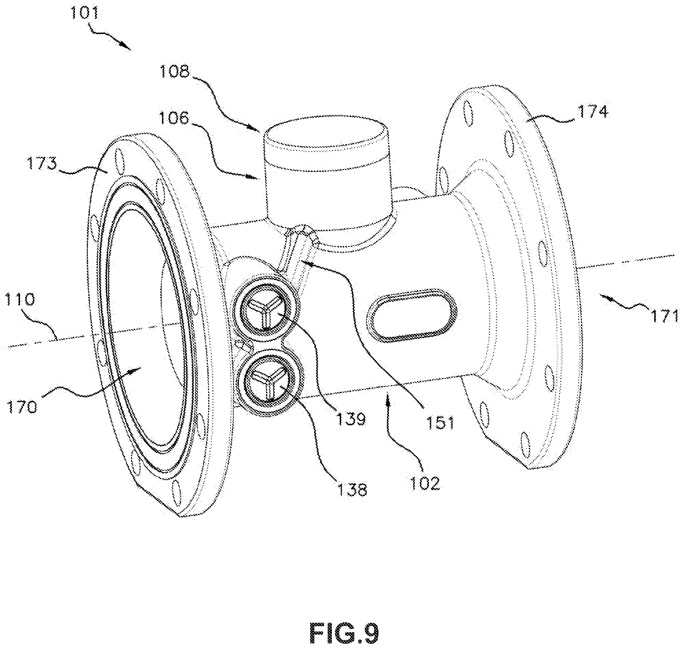

Un deuxième mode de réalisation d'un débitmètre selon l'invention est représenté aux figures 8 et 9. Le débitmètre 101 diffère d'un débitmètre 1 selon le premier mode de réalisation en ce qu'il comprend quatre logements 130, 131, chaque logement 130, 131 délimitant un volume interne de réception d'un unique transducteur 136, 137 à ultrasons. Dans une alternative, le débitmètre 101 comprend deux logements 130, 131, chaque logement 130, 131 délimitant un volume interne de réception d'un unique transducteur 136, 137 à ultrasons.

Le fond de chaque logement 130, 131 présente une niche 140, 142 adaptées pour recevoir l'extrémité distale de chaque transducteur 136, 137 à ultrasons.

Le débitmètre 101 comporte en outre des capots 138, 139 latéraux aptes à obturer l'ouverture de chaque logement 130, 131, le capot 138 obturant l'ouverture du logement 130 et le capot 139 latéral obturant l'ouverture du logement 131.

Le débitmètre 101 présente également deux conduits reliant le réceptacle 106 principal, et plus particulièrement le volume interne de réception de la carte 65 électronique du réceptacle 106 principal, au volume interne de réception de chaque transducteur à ultrasons, c'est-à-dire à chaque logement 130, 131. La paroi de la canalisation 102 peut présenter une surépaisseur dans chaque zone dans laquelle est ménagé un conduit par exemple de façon à former une nervure 151 au sein de laquelle est au moins en partie ménagé un conduit. Chaque conduit débouche dans un logement 131 via un orifice 155 de sortie.

Le débitmètre 101 comprend en outre un capot 108 principal adapté pour pouvoir obturer l'ouverture principale du réceptacle 106 principal.

Un conduit secondaire peut être ménagé au sein des parois adjacentes des logements 130, 131 afin de relier le volume interne du logement 130 au volume interne du logement 131, ce conduit secondaire présentant un orifice 153 d'entrée (figure 8).

La canalisation 102 se présente sous la forme générale d'un tube terminé aux deux extrémités par des raccords 173, 174 annulaires susceptibles d'être assemblés à des conduites à l'aide d'organes d'assemblage tels que des boulons et des écrous. Entre les raccords 173, 174, la canalisation peut être parcourue par un fluide depuis une entrée 170 de fluide jusqu'à une sortie 171 de fluide.

Chaque débitmètre peut comprendre en outre un afficheur relié électriquement à ladite carte électronique. Un tel afficheur peut être situé sous le capot 8 principal du réceptacle 6 principal. Par ailleurs, un tel afficheur, comprenant par exemple une électronique d'interface couplée à un écran LCD, permet à un utilisateur de lire les informations fournies par le débitmètre.

Afin de procéder au montage d'un débitmètre 1, 101 selon l'invention on peut réaliser tout ou partie des étapes suivantes :
- on monte au moins un premier transducteur à ultrasons 36, 37, 137, 136 dans le volume interne de réception du premier transducteur à ultrasons du premier logement 30, 130, 131 et on monte au moins un deuxième transducteur à ultrasons dans le volume interne de réception du deuxième transducteur à ultrasons du deuxième logement 40,
- on monte ladite carte électronique 65 dans le volume interne de réception de ladite carte électronique dudit réceptacle 6 principal,
- on relie électriquement ladite carte électronique 65 au premier transducteur 36, 37, 137, 136 à ultrasons et au deuxième transducteur à ultrasons. Pour ce faire, en particulier, on introduit au moins un premier câble électrique dans le premier conduit reliant électriquement le premier transducteur 36, 37, 137, 136 à ultrasons à la carte électronique 65 et on introduit au moins un deuxième câble électrique dans le deuxième conduit reliant électriquement le deuxième transducteur à ultrasons à la carte électronique 65,
- on monte les capots 39, 49, 138, 139 latéraux sur l'ouverture 32, 42 de chaque logement 30, 40, 130, 131,
- après avoir relié électriquement ladite carte électronique 65 au premier transducteur 36, 37, 137, 136 à ultrasons et au deuxième transducteur à ultrasons, on introduit un matériau de comblement sous forme liquide par l'ouverture principale du réceptacle 6 principal,
- on réalise une étape de polymérisation et/ou de durcissement dudit matériau de comblement (par exemple par un chauffage à une température prédéterminée notamment en fonction de la nature du matériau de comblement).

Plus particulièrement, dans le cas du débitmètre 1 selon le premier mode de réalisation, on monte le capot 39 latéral sur l'ouverture 32 du logement 30 et on monte le capot 49 sur l'ouverture 42 du logement 40.

Il est en outre également possible de soumettre le réceptacle principal du débitmètre à une pression inférieure à la pression atmosphérique, en particulier une pression comprise entre 5mbar et 20 mbar. Pour ce faire on peut connecter le volume interne du réceptacle principal à une source d'aspiration (« vide ») au cours de l'étape d'introduction du matériau de comblement dans le débitmètre et/ou postérieurement à l'étape d'introduction du matériau de comblement dans le débitmètre. Ceci permet de faciliter l'évacuation de l'air contenu dans le débitmètre au profit du matériau de comblement. Il est également possible de disposer le débitmètre dans une enceinte dans laquelle règne une pression inférieure à la pression atmosphérique.

L'agencement des éléments disposés dans l'espace interne du boîtier est adapté pour que le matériau de comblement puisse se répandre à l'état liquide depuis le réceptacle 6 principal, au travers des conduits 50, jusqu'à chaque logement 30, 40. En particulier, le boîtier 61 peut présenter des ouvertures dans son fond afin de laisser le matériau de comblement sous forme liquide s'écouler vers le fond du réceptacle 6 principal et les conduits 50.

L'ouverture 4 du réceptacle 6 principal permet avantageusement, en fin d'un processus de montage des différents éléments composant le débitmètre, l'introduction d'un matériau de comblement sous forme liquide choisi dans un groupe formé de résines thermodurcissables. En particulier, ledit matériau de comblement est choisi dans un groupe formé des résines époxydes (ou plus couramment dénommées « époxy »), des polyuréthanes, des silicones (notamment les polydiméthylsiloxanes (PDMS)), de leurs copolymères et de leurs mélanges.

Après avoir été introduit par l'ouverture 4 du réceptacle 6 principal, le matériau de comblement sous forme liquide s'écoule vers chaque conduit 50 via les entrées 53, 54 de chaque conduit vers chacun des logements 30, 40.

Un débitmètre 1, 101 obtenu à l'issue d'un procédé de montage selon l'invention comprend un matériau de comblement remplissant au moins en partie le volume interne de réception de chaque transducteur 36, 37, 137, 136 à ultrasons de chaque logement 30, 130, 131, chaque conduit 50 et le volume interne du réceptacle 6, 106 principal (c'est-à-dire le volume interne de réception de la carte électronique).

Dans un débitmètre 101 selon le deuxième mode de réalisation représenté aux figures 8 et 9, le matériau de comblement sous forme liquide s'écoule en outre depuis chaque logement 131 vers chaque logement 130 au travers d'un canal secondaire via l'orifice 153 d'entrée.

Un débitmètre 1, 101 obtenu à l'issue du procédé de montage décrit ci-dessus constitue un corps de mesure que l'on peut personnaliser. En effet, à ce stage, un tel débitmètre 1, 101 peut mesurer un débit et calculer des volumes. Ainsi, un tel débitmètre 1, 101 peut être étalonné en le connectant à un banc de test. Toutefois, un tel débitmètre 1, 101 ne comporte pas d'interface utilisateur pour interagir avec un utilisateur du débitmètre.

Afin de procéder au montage d'une telle interface utilisateur dans le débitmètre 1, 101, on peut réaliser tout ou partie des étapes suivantes :
- on fournit au moins une interface utilisateur. Celle-ci peut comprendre un afficheur et un accumulateur électrique tels que décrits plus haut. Par ailleurs, l'interface utilisateur peut comprendre des moyens de communication tel qu'un émetteur-récepteur. Dans une mise en œuvre particulière, on monte l'interface utilisateur derrière un capot d'étanchéité transparent de manière à protéger l'interface utilisateur. Pour cela, on peut utiliser une résine transparente pour recouvrir l'interface utilisateur lorsqu'elle est montée dans le capot d'étanchéité transparent. Dans ce cas, on s'assurera de choisir une résine présentant des propriétés optiques pour prévenir la condensation au niveau de l'affichage de l'interface utilisateur,
- on retire le capot 8 principal du réceptacle 6 principal,
- on introduit un matériau de comblement sous forme liquide par l'ouverture principale du réceptacle 6 principal, de manière à remplir tout ou partie du volume vide restant du volume interne du réceptacle 6 principal,
- on relie électriquement l'interface utilisateur à la carte électronique 65 et on positionne l'interface utilisateur dans un volume vide restant du volume interne du réceptacle 6 principal,
- on retourne le débitmètre 1, 101 de manière à ce que le matériau de comblement enrobe l'interface utilisateur,
- on réalise une étape de polymérisation et/ou de durcissement dudit matériau de comblement (par exemple par un chauffage à une température prédéterminée notamment en fonction de la nature du matériau de comblement), et
- on place le capot 8 principal sur le réceptacle 6 principal. Dans une mise en œuvre particulière, on remplace le capot 8 par un capot de finalisation. Un tel capot de finalisation peut comporter des informations de signalisation nécessaires et/ou des informations de personnalisation du débitmètre 1, 101.

Ainsi, le débitmètre 1, 101 obtenu à l'issue de ce procédé de montage est complet. C'est à dire capable de mesurer et de communiquer d'une manière ses mesures sans l'utilisation d'un système propriétaire.

Un débitmètre selon l'invention permet de faciliter l'étape de remplissage à l'aide d'un matériau de comblement d'un procédé de fabrication d'un débitmètre et de diminuer la durée nécessaire à une telle fabrication puisqu'une seule étape d'introduction dudit matériau de comblement suffit, l'introduction du matériau de comblement dans le réceptacle 6 principal suffisant à permettre une répartition et un remplissage par le matériau de comblement de chaque logement 30, 130, 131, de chaque conduit 50 et du réceptacle principal.

En outre, des capots 39, 49, 138, 139 latéraux transparents permettent de contrôler le bon remplissage des logements 30, 40, 130, 131 par le matériau de comblement au cours de l'introduction de celui-ci à l'état liquide, c'est-à-dire l'augmentation progressive du niveau de matériau de comblement sous forme liquide au fur et à mesure de l'écoulement de celui-ci depuis le réceptacle principal à travers les conduits 5.

Un tel matériau de comblement a pour avantage d'assurer l'étanchéité dudit débitmètre, en particulier vis-à-vis du fluide circulant dans la canalisation, et permet, en outre, de consolider l'assemblage de l'ensemble des éléments du débitmètre, le matériau de comblement durcissant au contact de la canalisation à l'intérieur de chacun des conduits, de chaque logement 30, 40 et du réceptacle 6 principal. Le matériau de comblement permet donc de protéger les contacts électriques et les câbles électriques des transducteurs et de la carte électronique disposée à l'intérieur du réceptacle principal et les reliant via les conduits 50.

Un débitmètre selon l'invention présente en outre une fiabilité, une durée de vie et une résistance dans les environnements agressifs, en particulier dans les milieux liquides, permettant son utilisation à des fins commerciales ou réglementaires.

L'invention peut faire l'objet de nombreuses variantes et applications autres que celles décrites ci-dessus. En particulier, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente. Par exemple, il est également possible de disposer la carte électronique différemment, en particulier horizontalement et de prévoir éventuellement un ou plusieurs trous traversant l'épaisseur de la carte électronique afin de faciliter le passage du matériau de comblement à l'intérieur du réceptacle 6 principale et/ou du boîtier 61. En outre, il est également possible de prévoir un procédé de montage d'un débitmètre selon l'invention dans lequel le matériau de comblement serait introduit par l'ouverture de l'un des logements 30, 40, 130, 131, les conduits permettant l'écoulement d'un matériau de comblement sous forme liquide vers le ou les autres logements de réception de transducteurs à ultrasons et/ou vers ledit réceptacle principal

## Revendications

1. Débitmètre comportant :
- une canalisation (2) de mesure du débit d'un fluide, ladite canalisation s'étendant selon un axe longitudinal (10, 110),
- au moins un premier transducteur (36, 37, 137, 136) à ultrasons et au moins un deuxième transducteur à ultrasons, lesdits transducteurs à ultrasons étant montés en regard l'un de l'autre vis-à-vis d'une paroi de ladite canalisation,
- au moins un premier logement (30, 130, 131) délimitant un volume interne de réception dudit premier transducteur à ultrasons, et au moins un deuxième logement (40) délimitant un volume interne de réception dudit deuxième transducteur à ultrasons,
- des capots (39, 49, 138, 139) latéraux aptes à obturer l'ouverture (32, 42) de chaque logement (30, 40, 130, 131)
- au moins une carte électronique (65) reliée électriquement au premier transducteur (36, 37, 137, 136) à ultrasons et au deuxième transducteur à ultrasons,
- un réceptacle (6, 106) principal comprenant une ouverture principale (4) et un fond (5), la concavité dudit réceptacle principal étant orientée à l'opposé d'un axe longitudinal de la canalisation, ledit réceptacle principal délimitant un volume interne de réception de ladite carte électronique,
**caractérisé en ce qu'**il comporte :
- au moins un premier conduit (50) reliant le volume interne de réception de ladite carte électronique dudit réceptacle au volume interne de réception dudit premier transducteur à ultrasons, le premier conduit étant ménagé au sein de la paroi de ladite canalisation,
- au moins un deuxième conduit reliant le volume interne de réception de ladite carte électronique dudit réceptacle au volume interne de réception dudit deuxième transducteur à ultrasons, le deuxième conduit étant ménagé au sein de la paroi de ladite canalisation,
- un matériau de comblement choisi dans un groupe formé de résines thermodurcissables, ledit matériau de comblement remplissant au moins en partie ledit volume interne de réception dudit premier transducteur à ultrasons, ledit volume interne de réception dudit deuxième transducteur à ultrasons,
ledit premier conduit (50) et ledit deuxième conduit, ledit matériau de comblement remplissant en outre au moins en partie ledit volume interne de réception de ladite carte électronique (65).

2. Débitmètre selon la revendication 1, **caractérisé en ce qu'**il comprend en outre au moins un premier câble électrique s'étendant dans ledit premier conduit de façon à relier électriquement ledit premier transducteur (36, 37, 137, 136) à ultrasons à ladite carte électronique (65) et au moins un deuxième câble électrique s'étendant dans ledit deuxième conduit de façon à relier électriquement ledit deuxième transducteur à ultrasons à ladite carte électronique (65).

3. Débitmètre selon l'une quelconque des revendications 1 ou 2, **caractérisé en ce que** la paroi de la canalisation (2) présente une surépaisseur dans chaque zone dans laquelle est ménagé un conduit (50) de façon à former une nervure (51, 151) au sein de laquelle est au moins en partie ménagé un conduit (50).

4. Débitmètre selon l'une quelconque des revendications 1 à 3, **caractérisé en ce qu'**il comprend un capot principal apte à obturer l'ouverture principale dudit réceptacle principal.

5. Débitmètre selon l'une des revendications 1 à 4, **caractérisé en ce que** chaque logement (30, 40) comprend une ouverture (32, 42) et un fond (33, 43), la concavité de chaque logement étant orientée à l'opposé de l'axe longitudinal de ladite canalisation.

6. Débitmètre selon l'une des revendications 1 à 5, **caractérisé en ce que** lesdits capots (39, 49) latéraux sont transparents.

7. Débitmètre selon l'une quelconque des revendications 1 à 6, **caractérisé en ce qu'**il comprend en outre un boîtier (61) contenant ladite carte électronique (65), ledit boîtier étant disposé dans le volume interne dudit réceptacle (6) principal.

8. Débitmètre selon l'une quelconque des revendications 1 à 7, **caractérisé en ce que** ledit premier transducteur (36, 37, 137, 136) à ultrasons et ledit deuxième transducteur à ultrasons s'étendent selon une direction orthogonale à l'axe longitudinal de ladite canalisation.

9. Débitmètre selon l'une quelconque des revendications 1 à 8, **caractérisé en ce qu'**il comprend quatre transducteurs à ultrasons, le volume interne de réception de chacun desdits premier et deuxième logements recevant deux transducteurs à ultrasons.

10. Débitmètre selon l'une quelconque des revendications 1 à 9, **caractérisé en ce qu'**il comprend en outre un troisième logement de réception d'au moins un transducteur à ultrasons et un quatrième logement de réception d'au moins un transducteur à ultrasons.

11. Procédé de montage d'un débitmètre selon les revendications 1 à 10, **caractérisé en ce qu'**il comporte les étapes suivantes :
- on monte ledit premier transducteur à ultrasons (36, 37, 137, 136) dans le volume interne de réception dudit premier transducteur à ultrasons dudit premier logement (30, 130, 131) et on monte ledit deuxième transducteur à ultrasons dans le volume interne de réception dudit deuxième transducteur à ultrasons dudit deuxième logement (40),
- on monte ladite carte électronique (65) dans le volume interne de réception de ladite carte électronique dudit réceptacle (6, 106) principal,
- on relie électriquement ladite carte électronique au premier transducteur (36, 37, 137, 136) à ultrasons et au deuxième transducteur à ultrasons,
- après avoir relié électriquement ladite carte électronique (65) au premier transducteur (36, 37, 137, 136) à ultrasons et au deuxième transducteur à ultrasons, on introduit un matériau de comblement sous forme liquide par l'ouverture principale (4) du réceptacle (6, 106) principal,
- on réalise une étape de polymérisation et/ou de durcissement dudit matériau de comblement, et
- préalablement à l'introduction dudit matériau de comblement sous forme liquide, on obture les ouvertures de chaque logement (30, 40, 130, 131) par des capots (39, 49, 138, 139) latéraux.

12. Procédé selon la revendication 11, **caractérisé en ce qu'**on introduit au moins un premier câble électrique dans le premier conduit reliant électriquement le premier transducteur (36, 37, 137, 136) à ultrasons à la carte électronique (65) et on introduit au moins un deuxième câble électrique dans le deuxième conduit reliant électriquement le deuxième transducteur à ultrasons à la carte électronique (65).

13. Procédé selon l'une quelconque des revendications 11 à 12, **caractérisé en ce qu'**il comporte les étapes suivantes :
- on fournit au moins une interface utilisateur comprenant un afficheur, un accumulateur électrique et des moyens de communication,
- on retire le capot (8) principal du réceptacle 6 principal,
- on introduit un matériau de comblement sous forme liquide par l'ouverture principale du réceptacle (6) principal, de manière à remplir tout ou partie du volume vide restant du volume interne du réceptacle 6 principal,
- on relie électriquement l'interface utilisateur à la carte électronique (65) et on positionne l'interface utilisateur dans un volume vide restant du volume interne du réceptacle (6) principal,
- on retourne le débitmètre (1, 101) de manière à ce que le matériau de comblement enrobe l'interface utilisateur,
- on réalise une étape de polymérisation et/ou de durcissement dudit matériau de comblement,
- on place le capot (8) principal sur le réceptacle (6) principal.

## Patentansprüche

1. Durchflussmesser, umfassend:
- eine Leitung (2) zum Messen der Durchflussmenge eines Mediums, wobei sich die Leitung entlang einer Längsachse (10, 110) erstreckt,
- mindestens einen ersten Ultraschall-Messwandler (36, 37, 137, 136) und mindestens einen zweiten Ultraschall-Messwandler, wobei die Ultraschall-Messwandler einander zugewandt gegenüber einer Wand der Leitung montiert sind,
- mindestens einen ersten Sitz (30, 130, 131), der ein Innenvolumen zur Aufnahme des ersten Ultraschall-Messwandlers begrenzt, und mindestens einen zweiten Sitz (40), der ein Innenvolumen zur Aufnahme des zweiten Ultraschall-Messwandlers begrenzt,
- seitliche Abdeckungen (39, 49, 138, 139), die geeignet sind, die Öffnung (32, 42) jedes Sitzes (30, 40, 130, 131) zu verschließen
- mindestens eine Elektronikkarte (65), die mit dem ersten Ultraschall-Messwandler (36, 37, 137, 136) und mit dem zweiten Ultraschall-Messwandler elektrisch verbunden ist,
- einen Hauptbehälter (6, 106), der eine Hauptöffnung (4) und einen Boden (5) umfasst, wobei die Konkavität des Hauptbehälters entgegengesetzt zu einer Längsachse der Leitung ausgerichtet ist, wobei der Hauptbehälter ein Innenvolumen zur Aufnahme der Elektronikkarte begrenzt, **dadurch gekennzeichnet, dass** er umfasst:
- mindestens einen ersten Kanal (50), der das Innenvolumen zur Aufnahme der Elektronikkarte des Behälters mit dem Innenvolumen zur Aufnahme des ersten Ultraschall-Messwandlers verbindet, wobei der erste Kanal in der Wand der Leitung ausgebildet ist,
- mindestens einen zweiten Kanal, der das Innenvolumen zur Aufnahme der Elektronikkarte des Behälters mit dem Innenvolumen zur Aufnahme des zweiten Ultraschall-Messwandlers verbindet, wobei der zweite Kanal im Inneren der Wand der Leitung ausgebildet ist,
- ein Füllmaterial, das aus einer aus wärmehärtbaren Harzen gebildeten Gruppe gewählt ist, wobei das Füllmaterial mindestens zum Teil das Innenvolumen zur Aufnahme des ersten Ultraschall-Messwandlers, das Innenvolumen zur Aufnahme des zweiten Ultraschall-Messwandlers, den ersten Kanal (50) und den zweiten Kanal füllt, wobei das Füllmaterial ferner mindestens zum Teil das Innenvolumen zur Aufnahme der Elektronikkarte (65) füllt.

2. Durchflussmesser nach Anspruch 1, **dadurch gekennzeichnet, dass** er ferner mindestens ein erstes Stromkabel umfasst, das sich in dem ersten Kanal so erstreckt, dass es den ersten Ultraschall-Messwandler (36, 37, 137, 136) mit der Elektronikkarte (65) verbindet, und mindestens ein zweites Stromkabel, das sich in dem zweiten Kanal so erstreckt, dass es den zweiten Ultraschall-Messwandler mit der Elektronikkarte (65) verbindet.

3. Durchflussmesser nach einem der Ansprüche 1 oder 2, **dadurch gekennzeichnet, dass** die Wand der Leitung (2) eine Verdickung in jedem Bereich aufweist, in dem ein Kanal (50) ausgebildet ist, so dass eine Rippe (51, 151) gebildet wird, in der mindestens zum Teil ein Kanal (50) ausgebildet ist.

4. Durchflussmesser nach einem der Ansprüche 1 bis 3, **dadurch gekennzeichnet, dass** er eine Hauptabdeckung umfasst, die geeignet ist, die Hauptöffnung des Hauptbehälters zu verschließen.

5. Durchflussmesser nach einem der Ansprüche 1 bis 4, **dadurch gekennzeichnet, dass** jeder Sitz (30, 40) eine Öffnung (32, 42) und einen Boden (33, 43) umfasst, wobei die Konkavität jedes Sitzes entgegengesetzt zu der Längsachse der Leitung ausgerichtet ist.

6. Durchflussmesser nach einem der Ansprüche 1 bis 5, **dadurch gekennzeichnet, dass** die seitlichen Abdeckungen (39, 49) transparent sind.

7. Durchflussmesser nach einem der Ansprüche 1 bis 6, **dadurch gekennzeichnet, dass** er ferner ein Gehäuse (61) umfasst, das die Elektronikkarte (65) enthält, wobei das Gehäuse in dem Innenvolumen des Hauptbehälters (6) angeordnet ist.

8. Durchflussmesser nach einem der Ansprüche 1 bis 7, **dadurch gekennzeichnet, dass** sich der erste Ultraschall-Messwandler (36, 37, 137, 136) und der zweite Ultraschall-Messwandler entlang einer zu der Längsachse der Leitung senkrechten Richtung erstrecken.

9. Durchflussmesser nach einem der Ansprüche 1 bis 8, **dadurch gekennzeichnet, dass** er vier Ultraschall-Messwandler umfasst, wobei das Innenvolumen zur Aufnahme jedes der ersten und zweiten Sitze zwei Ultraschall-Messwandler aufnimmt.

10. Durchflussmesser nach einem der Ansprüche 1 bis 9, **dadurch gekennzeichnet, dass** er ferner einen dritten Sitz zur Aufnahme mindestens eines Ultraschall-Messwandlers und einen vierten Sitz zur Aufnahme mindestens eines Ultraschall-Messwandlers umfasst.

11. Verfahren zur Montage eines Durchflussmessers nach den Ansprüchen 1 bis 10, **dadurch gekennzeichnet, dass** es die folgenden Schritte umfasst:
- Montieren des ersten Ultraschall-Messwandlers (36, 37, 137, 136) in dem Innenvolumen zur Aufnahme des ersten Ultraschall-Messwandlers des ersten Sitzes (30, 130, 131) und Montieren des zweiten Ultraschall-Messwandlers in dem Innenvolumen zur Aufnahme des zweiten Ultraschall-Messwandlers des zweiten Sitzes (40),
- Montieren der Elektronikkarte (65) in dem Innenvolumen zur Aufnahme der Elektronikkarte des Hauptbehälters (6, 106),
- elektrisches Verbinden der Elektronikkarte mit dem ersten Ultraschall-Messwandler (36, 37, 137, 136) und mit dem zweiten Ultraschall-Messwandler,
- nach dem elektrischen Verbinden der Elektronikkarte (65) mit dem ersten Ultraschall-Messwandler (36, 37, 137, 136) und mit dem zweiten Ultraschall-Messwandler, Einführen eines Füllmaterials in flüssiger Form durch die Hauptöffnung (4) des Hauptbehälters (6, 106),
- Ausführen eines Schritts zur Polymerisation und/oder zum Aushärten des Füllmaterials, und
- vor dem Einführen des Füllmaterials in flüssiger Form, Verschließen der Öffnungen jedes Sitzes (30, 40, 130, 131) durch seitliche Abdeckungen (39, 49, 138, 139).

12. Verfahren nach Anspruch 11, **dadurch gekennzeichnet, dass** mindestens ein erstes Stromkabel in den ersten Kanal eingeführt wird, das den ersten Ultraschall-Messwandler (36, 37, 137, 136) mit der Elektronikkarte (65) verbindet, und mindestens ein zweites Stromkabel in den zweiten Kanal eingeführt wird, das den zweiten Ultraschall-Messwandler mit der Elektronikkarte (65) verbindet.

13. Verfahren nach einem der Ansprüche 11 bis 12, **dadurch gekennzeichnet, dass** es die folgenden Schritte umfasst:
- Bereitstellen mindestens einer Benutzerschnittstelle, die eine Anzeige, einen Stromspeicher und Kommunikationsmittel umfasst,
- Entfernen der Hauptabdeckung (8) von dem Hauptbehälter 6,
- Einführen eines Füllmaterials in flüssiger Form durch die Hauptöffnung des Hauptbehälters (6), so dass der gesamte oder ein Teil des verbleibenden leeren Volumens des Innenvolumens des Hauptbehälters 6 gefüllt wird,
- elektrisches Verbinden der Benutzerschnittstelle mit der Elektronikkarte (65) und Positionieren der Benutzerschnittstelle in einem verbleibenden leeren Volumen des Innenvolumens des Hauptbehälters (6),
- Wenden des Durchflussmessers (1, 101), so dass das Füllmaterial die Benutzerschnittstelle umhüllt,
- Ausführen eines Schritts zur Polymerisation und/oder zum Aushärten des Füllmaterials,
- Anbringen der Hauptabdeckung (8) an dem Hauptbehälter 6.

## Claims

1. A flowmeter including:
- a pipe (2) for measuring the flowrate of a fluid, said pipe extending along a longitudinal axis (10, 110),
- at least one first ultrasound transducer (36, 37, 137, 136) and at least one second ultrasound transducer, said ultrasound transducers being mounted facing one another relative to a wall of said pipe,
- at least one first housing (30, 130, 131) delimiting an internal volume to receive said first ultrasound transducer and at least one second housing (40) delimiting an internal volume to receive said second ultrasound transducer,
- lateral covers (39, 49, 138, 139) adapted to block the opening (32, 42) of each housing (30, 40, 130, 131),
- at least one electronic circuit card (65) electrically connected to the first ultrasound transducer (36, 37, 137, 136) and to the second ultrasound transducer,
- a main receptacle (6, 106) including a main opening (4) and a bottom (5), the concavity of said main receptacle being oriented away from a longitudinal axis of the pipe, said main receptacle delimiting an internal volume to receive said electronic circuit card,
**characterized in that** it includes:
- at least one first duct (50) connecting the internal volume to receive said electronic circuit card of said receptacle to the internal volume to receive said first ultrasound transducer, the first duct being formed within the wall of said pipe,
- at least one second duct connecting the internal volume to receive said electronic circuit card of said receptacle to the internal volume to receive said second ultrasound transducer, the second duct being formed within the wall of said pipe,
- a packing material chosen in a group formed of thermoset resins, said packing material filling at least in part said internal volume to receive said first ultrasound transducer, said internal volume to receive said second ultrasound transducer, said first duct (50) and said second duct, said packing material further filling at least in part said internal volume to receive said electronic circuit card (65).

2. The flowmeter as claimed in claim 1, **characterized in that** it further includes at least one first electric cable extending in said first duct so as electrically to connect said first ultrasound transducer (36, 37, 137, 136) to said electronic circuit card (65) and at least one second electric cable extending in said second duct so as electrically to connect said second ultrasound transducer to said electronic circuit card (65).

3. The flowmeter as claimed in either one of claims 1 or 2, **characterized in that** the wall of the pipe (2) has an increased thickness in each zone in which there is formed a duct (50) so as to form a rib (51, 151) within which a duct (50) is at least in part formed.

4. The flowmeter as claimed in any one of claims 1 to 3, **characterized in that** it includes a main cover adapted to block the main opening of said main receptacle.

5. The flowmeter as claimed in any one of claims 1 to 4, **characterized in that** each housing (30, 40) includes an opening (32, 42) and a bottom (33, 43), the concavity of each housing being oriented away from the longitudinal axis of said pipe.

6. The flowmeter as claimed in any one of claims 1 to 5, **characterized in that** said lateral covers (39, 49) are transparent.

7. The flowmeter as claimed in any one of claims 1 to 6, **characterized in that** it further includes a casing (61) containing said electronic circuit card (65), said casing being disposed in the internal volume of said main receptacle (6).

8. The flowmeter as claimed in any one of claims 1 to 7, **characterized in that** said first ultrasound transducer (36, 37, 137, 136) and said second ultrasound transducer extend in a direction orthogonal to the longitudinal axis of said pipe.

9. The flowmeter as claimed in any one of claims 1 to 8, **characterized in that** it includes four ultrasound transducers, the receiving internal volume of each of said first and second housings receiving two ultrasound transducers.

10. The flowmeter as claimed in any one of claims 1 to 9, **characterized in that** it further includes a third housing to receive at least one ultrasound transducer and a fourth housing to receive at least one ultrasound transducer.

11. A method of assembling a flowmeter as claimed in claims 1 to 10, **characterized in that** it includes the following steps:
- said first ultrasound transducer (36, 37, 137, 136) is mounted in the internal volume to receive said first ultrasound transducer of said first housing (30, 130, 131) and said second ultrasound transducer is mounted in the internal volume to receive said second ultrasound transducer of said second housing (40),
- said electronic circuit card (65) is mounted in the internal volume to receive said electronic circuit card of said main receptacle (6, 106),
- said electronic circuit card is electrically connected to the first ultrasound transducer (36, 37, 137, 136) and to the second ultrasound transducer,
- after electrically connecting said electronic circuit card (65) to the first ultrasound transducer (36, 37, 137, 136) and to the second ultrasound transducer a packing material is introduced in liquid form via the main opening (4) of the main receptacle (6, 106),
- a step is carried out of polymerizing and/or hardening said packing material, and
- before introducing said packing material in liquid form, the openings of each housing (30, 40, 130, 131) are blocked by lateral covers (39, 49, 138, 139).

12. The method as claimed in claim 11, **characterized in that** at least one first electric cable is introduced into the first duct electrically connecting the first ultrasound transducer (36, 37, 137, 136) to the electronic circuit card (65) and at least one second electric cable is introduced into the second duct electrically connecting the second ultrasound transducer to the electronic circuit card (65).

13. The method as claimed in either one of claims 11 and 12, **characterized in that** it includes the following steps:
- at least one user interface is procured including a display, an electrical accumulator and communication means,
- the main cover (8) is removed from the main receptacle 6,
- a packing material in liquid form is introduced via the main opening of the main receptacle (6) so as to fill all or part of the remaining empty volume of the internal volume of the main receptable 6,
- the user interface is electrically connected to the electronic circuit card (65) and the user interface is positioned in a remaining empty volume of the internal volume of the main receptacle (6),
- the flowmeter (1, 101) is turned over so that the packing material coats the user interface,
- a step is carried out of polymerizing and/or hardening said packing material,
- the main cover (8) is placed on the main receptacle (6).
